# FASCICULE DE BREVET EUROPEEN

(11) **EP 1 110 107 B1**
(45) Date de publication et mention de la délivrance du brevet: **06.05.2004**
(21) Numéro de dépôt: 99934819.6
(22) Date de dépôt: 30.07.1999
(51) Int. Cl.: G02B 1/04, G02B 1/10

(54) **LENTILLE OPHTALMIQUE EN VERRE ORGANIQUE COMPORTANT UNE COUCHE DE PRIMAIRE ANTI-CHOCS A BASE DE LATEX DE POLYURETHANE ET SON PROCEDE DE FABRICATION**
OPTHALMISCHE LINSE AUS ORGANISCHEM GLAS MIT EINER SCHLAGFESTEN GRUNDIERUNGSSCHICHT AUS POLYURETHANLATEX UND VERFAHREN ZU DEREN HERSTELLUNG
OPHTHALMIC ORGANIC GLASS LENS COMPRISING A SHOCKPROOF PRIMER LAYER BASED ON POLYURETHANE LATEX AND METHOD FOR MAKING SAME

(30) Priorité: 31.07.1998 FR 9809826
(43) Date de publication de la demande: 27.06.2001
(73) Titulaire: ESSILOR INTERNATIONAL COMPAGNIE GENERALE D'OPTIQUE, 94227 Charenton cédex (FR)
(72) Inventeur: DEGAND, Jean-Pierre, F-75002 Paris (FR); ROBERT, Anne, F-94000 Créteil (FR)
(74) Mandataire: Catherine, Alain
(86) Numéro de dépôt international: PCT/FR1999/001887
(87) Numéro de publication internationale: WO 2000/008493

(56) Documents cités:
- EP-A- 0 615 788
- US-A- 5 316 791
- DATABASE WPI Section Ch, Week 9412 Derwent Publications Ltd., London, GB; Class A25, AN 94-095136 XP002101529 & JP 06 043303 A (NIPPON SHEET GLASS CO LTD), 18 février 1994 (1994-02-18)
- DATABASE WPI Section Ch, Week 9649 Derwent Publications Ltd., London, GB; Class A25, AN 96-489075 XP002101520 & JP 08 248204 A (ITO KAGAKU KOGYO KK), 27 septembre 1996 (1996-09-27)

## Description

La présente invention concerne une lentille ophtalmique en verre organique comportant une couche de primaire anti-chocs à base de latex de polyuréthanne et son procédé de fabrication.

Les lentilles ophtalmiques en verre organique sont plus sensibles à la rayure et à l'abrasion que les lentilles en verre minéral.

Il est connu de protéger en surface les lentilles en verre organique au moyen de revêtements durs (anti-abrasion) généralement à base de polysiloxane.

Il est également connu de traiter les lentilles en verre organique de façon à empêcher la formation de reflets parasites gênants pour le porteur de la lentille et ses interlocuteurs. La lentille est alors pourvue d'un revêtement anti-reflets mono- ou multicouche, généralement en matière minérale.

Lorsque la lentille comporte dans sa structure un revêtement dur anti-abrasion, le revêtement anti-reflets est déposé sur la surface de la couche anti-abrasion. Un tel empilement diminue la résistance aux chocs, en rigidifiant le système qui devient alors cassant. Ce problème est bien connu dans l'industrie des lentilles ophtalmiques en verre organique.

Pour remédier à cet inconvénient on a proposé de disposer une couche de primaire anti-chocs entre la lentille en verre organique et le revêtement dur anti-abrasion.

Ainsi, les brevets japonais 63-141001 et 63-87223 décrivent des lentilles en verre organique comportant un primaire anti-chocs à base de résine de polyuréthanne thermoplastique. Le brevet US 5015523 quant à lui préconise l'emploi de primaires anti-chocs acryliques cependant que le brevet européen EP-0 404 111 décrit l'utilisation de primaires anti-chocs à base de polyuréthanne thermodurcissable.

Le document US 5,316,791 préconise l'utilisation d'une couche de primaire anti-chocs formée à partir d'une dispersion aqueuse de polyuréthanne appliquée directement sur une surface du substrat en verre organique. Pour former la couche de primaire anti-chocs, la dispersion aqueuse est séchée et durcie à l'air, à température ambiante (21-27°C).

Les procédés et primaires de l'art antérieur ne donnent pas entière satisfaction.

En particulier, il est souhaitable :
- d'améliorer l'aspect cosmétique des verres, c'est-à-dire éliminer toute imperfection optique (coulures ou cratères visibles à l'oeil nu),
- fournir un procédé de mise en oeuvre plus facile et plus rapide,
- en particulier, le brevet US 5,316,791 mentionne des délais assez courts pour le durcissement du primaire à température ambiante (de l'ordre de 15 minutes), mais cependant, en pratique, il s'avère que les délais de durcissement du primaire sont exagérément longs (jusqu'à plusieurs jours).

La demanderesse vient de découvrir, d'une façon inattendue, que l'utilisation de compositions de latex contenant au moins un latex de polyuréthanne et un agent de réticulation du polyuréthanne, mais exempte de tout latex incluant des motifs butadiène, permettait d'obtenir des couches de primaire anti-chocs entre un substrat en verre organique et un revêtement dur anti-abrasion, éventuellement revêtu d'un revêtement anti-reflets, ayant les propriétés voulues de résistance aux chocs, de cosmétique et dont par ailleurs l'indice peut être, le cas échéant, aisément adapté à l'indice de réfraction du verre organique, sans nuire aux propriétés de résistance à l'abrasion et anti-reflets des revêtements anti-abrasion et anti-reflets.

La présente invention a donc pour objet une lentille ophtalmique comprenant un substrat en verre organique, au moins un revêtement anti-abrasion et au moins une couche de primaire anti-chocs intercalée entre le verre organique et le revêtement anti-abrasion dont la couche de primaire anti-chocs est formée à partir d'une composition de latex comprenant au moins un latex de polyuréthanne et un agent de réticulation du polyuréthanne et exempte de tout latex incluant des motifs butadiène.

Un autre objet de l'invention concerne un procédé de fabrication de cette lentille.

Comme cela est bien connu, les latex sont des dispersions stables d'un polymère dans un milieu aqueux.

Les compositions de latex de la présente invention peuvent être constituées uniquement d'un ou plusieurs latex de polyuréthanne ou peuvent être également constituées d'un ou plusieurs latex de polyuréthanne mélangés avec un ou plusieurs autres latex ne comportant pas de motifs butadiène, en particulier des latex (méth)acryliques.

Les latex utilisés comportent de préférence de 30 à 70 % en poids d'extrait sec.

Les latex de polyuréthanne sont bien connus et peuvent être obtenus commercialement.

Les latex de polyuréthanne préférés sont des latex de polyuréthanne contenant des motifs polyesters. De préférence, les polyuréthannes sont des polyuréthannes obtenus par polymérisation d'un polyisocyanate aliphatique et d'un polyol aliphatique.

De tels latex de polyuréthanne peuvent être obtenus auprès de la société ZENECA RESINS sous la dénomination Néorez ®.

Les latex (méth)acryliques (ACM) sont également bien connus.

Les latex poly(méth)acryliques sont des latex de copolymères constitués principalement par un (méth)acrylate, tel que par exemple le (méth)acrylate d'éthyle ou de butyle, ou de méthoxy ou éthoxyéthyle, avec une proportion généralement mineure d'au moins un autre comonomère, tel que par exemple du styrène.

Les latex de poly(méth)acrylique recommandés dans les compositions de latex selon l'invention, sont les latex de copolymères acrylate-styrène.

De tels latex de copolymères acrylate-styrène sont disponibles commercialement auprès de la société ZENECA RESINS sous la dénomination Néocryl®.

Lorsqu'il est présent, le latex (méth)acrylique ou le mélange de latex (méth)acryliques représente en général 10 à 90%, de préférence 10 à 60% et mieux 40 à 60% du poids total des latex présents dans la composition.

Un autre constituant essentiel des compositions de latex selon l'invention est l'agent de réticulation du polyuréthanne. Les agents de réticulation des polyuréthannes sont bien connus et on peut citer parmi ceux-ci les aziridines polyfonctionnelles, les résines de mélamine méthoxyméthylée ou d'urée, par exemple les résines mélamine méthoxyméthylée/formaldéhyde et urée/formaldéhyde, les carbodiimides, les polyisocyanates et les polyisocyanates bloqués. Les agents de réticulation préférés sont les aziridines, en particulier les aziridines trifonctionnelles.

Un dérivé d'aziridine recommandé est commercialisé sous la dénomination CX 100 par la société ZENECA RESINS.

Un dérivé de carbodiimide dispersable dans l'eau est commercialisé par UNION CARBIDE sous la dénomination XL-29 SE.

Un dérivé polyisocyanate dispersable dans l'eau est commercialisé par BAYER sous la dénomination XP 7063 et un dérivé de méthoxyméthylmélamine par la Société CYTEC sous la dénomination CYMEL® 303.

La quantité d'agent de réticulation dans les compositions de latex selon l'invention est généralement de 0,1 à 5% en poids par rapport au poids total de la solution de latex dans la composition, de préférence de l'ordre de 3%.

L'agent de réticulation est ajouté dans le latex déjà préparé.

L'incorporation d'un agent de réticulation dans les compositions de primaire de l'invention et l'obtention d'une couche de primaire réticulé conduit de façon surprenante à une amélioration de la résistance aux chocs et plus particulièrement pour les couches de primaire relativement mince, généralement inférieure à 1,5 µm.

Dans le présent document, sauf indication contraire, les pourcentages en poids de latex, représentent les pourcentages des solutions de latex incorporées dans les compositions, y compris les poids d'eau et de solvants éventuels de ces solutions.

Les compositions de latex selon l'invention peuvent comporter tout ingrédient classiquement utilisé dans les couches primaires pour l'adhésion de revêtement anti-abrasion sur des lentilles ophtalmiques en verre organique. En particulier, elles peuvent comprendre un agent antioxydant, un absorbeur UV, un agent tensio-actif, dans les proportions classiquement utilisées.

Comme agents tensio-actifs, on peut utiliser le Baysilone OL 31, le FC 430 commercialisés par la société 3M, le Silwet LS 7657, L 7604 ou L 77 de la société OSI Specialities.

La quantité d'agent tensio-actif, utilisée est généralement de 0 à 1% en poids par rapport au poids total des latex présents dans la composition.

D'une manière générale, l'extrait sec de latex dans les compositions de l'invention varie de 5 à 40 % en poids, préférentiellement 7-35 % en poids, et mieux encore de l'ordre de 10 à 30 % en poids de la composition.

Les compositions de latex selon l'invention peuvent comprendre un absorbeur UV dans des proportions, variant de 0 à 10% en poids en matière active, de préférence de 0 à 5% en poids, et mieux encore de l'ordre de 2,5 % en poids.

L'absorbeur UV est de préférence choisi soluble ou facilement dispersable en solution aqueuse.

Comme absorbeur UV, on utilisera de préférence un absorbeur UV de type benzimidazole, et de préférence du type comportant une fonction sulfonate.

A titre d'exemple d'un tel absorbeur UV, on peut citer le PARSOL HS qui est le sel de sodium de l'acide sulfonique suivant : 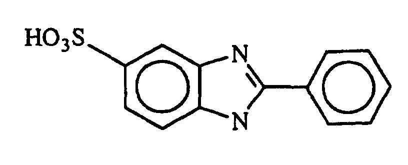 commercialisé par la société GIVAUDAN.

Les substrats des lentilles conformes à la présente invention sont tous substrats en verre organique couramment utilisés pour les lentilles ophtalmiques organiques.

Parmi les substrats convenant pour les lentilles selon l'invention, on peut citer des substrats obtenus par polymérisation, des (méth)acrylates d'alkyle, en particulier les (méth)acrylates d'alkyle en C₁-C₄ tels que le méthyl(méth)acrylate et l'éthyl(méth)acrylate, les dérivés allyliques tels que les allylcarbonates de polyol aliphatique ou aromatique, linéaires ou ramifiés, les thio(méth)acryliques, les thiouréthannes, les (méth)acrylates aromatiques polyéthoxylés tels que les bisphénols-A diméthacrylates polyéthoxylés.

Parmi les substrats recommandés, on peut citer des substrats obtenus par polymérisation des allyl carbonates de polyols parmi lesquels on peut mentionner l'éthylène glycol bis allyl carbonate, le diéthylène glycol bis 2-méthyl carbonate, le diéthylène glycol bis (allyl carbonate), l'éthylène glycol bis (2-chloro allyl carbonate), le triéthylène glycol bis (allyl carbonate), le 1,3-propane diol bis (allyl carbonate), le propylène glycol bis (2-éthyl allyl carbonate), le 1,3-butane diol bis (allyl carbonate), le 1,4-butane diol bis (2-bromo allyl carbonate), le dipropylène glycol bis (allyl carbonate), le triméthylène glycol bis (2-éthyl allyl carbonate), le pentaméthylène glycol bis (allyl carbonate), l'isopropylène bis phénol-A bis (allyl carbonate).

Les substrats particulièrement recommandés sont les substrats obtenus par polymérisation du bis allyl carbonate du diéthylène glycol, vendu sous la dénomination commerciale CR39® par la Société PPG INDUSTRIE (lentille ORMA® ESSILOR).

Parmi les substrats également recommandés, on peut citer les substrats obtenus par polymérisation de monomères thio(méth) acryliques, tels que ceux décrits dans la demande de brevet français FR-A-2 734 827.

Bien évidemment, les substrats peuvent être obtenus par polymérisation de mélanges des monomères ci-dessus.

Les revêtements durs anti-abrasion des lentilles ophtalmiques selon l'invention peuvent être tous revêtements anti-abrasion connus dans le domaine de l'optique ophtalmique.

Parmi les revêtements durs anti-abrasion recommandés dans la présente invention, on peut citer les revêtements obtenus à partir de compositions à base d'hydrolysat de silane, en particulier d'hydrolysat d'époxysilane, telles que celles décrites dans la demande de brevet français n° 93 02649.

Une composition pour revêtement dur anti-abrasion préférée, comprend par rapport au poids total de la composition environ 22% de glycidoxypropylméthyldiméthoxysilane, 62% de silice colloïdale à 30% de matière active et 0,70% d'acétylacétonate d'aluminium (catalyseur), le reste étant essentiellement constitué par les solvants classiquement utilisés pour la formulation de telles compositions.

Comme indiqué précédemment, la lentille ophtalmique selon l'invention peut comporter en outre un revêtement anti-reflets déposé sur le revêtement anti-abrasion.

A titre d'exemple, le revêtement anti-reflets peut être constitué d'un film mono- ou multicouche, de matériaux diélectriques tels que SiO, SiO₂, Si₃N₄, TiO₂, ZrO₂, Al₂O₃, MgF₂ ou Ta₂O₅, ou leurs mélanges. Il devient ainsi possible d'empêcher l'apparition d'une réflexion à l'interface lentille-air.

Ce revêtement anti-reflets est appliqué généralement par dépôt sous vide selon l'une des techniques suivantes :
1/ Par évaporation, éventuellement assistée par faisceau ionique.
2/ Par pulvérisation par faisceau d'ions.
3/ Par pulvérisation cathodique.
4/ Par dépôt chimique en phase vapeur assisté par plasma.

Outre le dépôt sous vide, on peut aussi envisager un dépôt d'une couche minérale par voie sol/gel, (par exemple à partir d'hydrolysats de tétraéthoxysilane).

Dans le cas où la pellicule comprend une seule couche, son épaisseur optique doit être égale à λ/4 où λ est une longueur d'onde comprise entre 450 et 650 nm.

Dans le cas d'un film multicouche comportant trois couches, on peut utiliser une combinaison correspondant à des épaisseurs optiques respectives λ/4-λ/2-λ/4 ou λ/4-λ/4-λ/4.

On peut en outre utiliser un film équivalent formé par plus de couches, à la place de l'une quelconque des couches faisant partie des trois couches précitées.

Les lentilles ophtalmiques selon l'invention peuvent être constituées d'un substrat en verre organique revêtu sur sa face arrière ou sa face avant d'une intercouche de primaire anti-chocs selon l'invention, d'un revêtement anti-abrasion déposé sur la couche de primaire et éventuellement d'un revêtement anti-reflets sur le revêtement anti-abrasion.

Egalement, le substrat peut être revêtu sur ses deux faces d'une couche de primaire anti-chocs selon l'invention, d'un revêtement anti-abrasion et éventuellement d'un revêtement anti-reflets.

Les lentilles ophtalmiques préférées selon l'invention comportent une seule couche de primaire anti-chocs déposée en face arrière de la lentille et, sur chacune des faces, un revêtement anti-abrasion et un revêtement anti-reflets appliqué sur le revêtement anti-abrasion.

Par exemple, on obtient une telle lentille en déposant une couche de la composition de latex par centrifugation sur la face arrière de la lentille. On soumet alors la couche à une cuisson à une température d'au moins 70°C pour former la couche de primaire anti-choc. La température de cuisson du primaire peut varier de 70°C à 140°C mais est de préférence de l'ordre de 90°C, la durée de cuisson variant de plusieurs heures à quelques minutes mais étant généralement de 1 heure environ. On applique ensuite par trempage ("dip coating") le revêtement dur anti-abrasion sur les deux faces de la lentille. Enfin après durcissement de ce revêtement dur, on applique un revêtement anti-reflets sur les deux faces de la lentille.

Une lentille ophtalmique ainsi obtenue présente une excellente résistance à l'abrasion sur sa face avant, la plus sollicitée lors des manipulations de ses lunettes par l'utilisateur et une excellente résistance aux chocs.

Selon la présente invention, l'épaisseur de la couche de primaire anti-chocs obtenue après cuisson, est de préférence comprise entre 0,2 et 2,5 µm et plus particulièrement entre 0,5 et 1,5 µm.

L'épaisseur du revêtement anti-abrasion est quant à lui généralement compris entre 1 et 10 µm et plus particulièrement entre 2 et 6 µm.

La présente invention a donc également pour objet un procédé de fabrication d'une lentille comprenant un substrat en verre organique, au moins un revêtement dur anti-abrasion, éventuellement recouvert d'un revêtement anti-reflets, et au moins une couche de primaire anti-chocs intercalée entre le substrat et le revêtement anti-abrasion, le procédé comprenant :
- le dépôt sur au moins une face du substrat, par exemple par centrifugation, d'une couche d'une composition de latex telle que définie ci-dessus;
- la cuisson de cette composition de latex à une température d'au moins 70°C pour former la ou les couches de primaire anti-chocs;
- le dépôt sur la ou les couches de primaire anti-chocs formées d'un revêtement dur anti-abrasion; et, facultativement,
- le dépôt sur le ou les revêtements durs anti-abrasion d'un revêtement anti-reflets.

Les exemples suivants illustrent la présente invention.

Dans les exemples, sauf indication contraire, tous les pourcentages et parties sont exprimés en poids.

### EXEMPLES COMPARATIFS A à C et EXEMPLES 1 à 7

On a déposé par centrifugation (1500 tours/minute pendant 10 à 15 secondes) sur la face arrière de lentilles en verre organique (ORMA® en CR 39® de la société ESSILOR) les compositions de latex selon l'invention indiquées dans le tableau I ci-dessous, et modifiées par dilution afin d'obtenir la viscosité souhaitée.

Les compositions de latex sont ensuite cuites à 90°C pendant 1 heure pour obtenir des couches de primaire anti-chocs ayant les épaisseurs indiquées au tableau I.

Après refroidissement, on déposait sur les faces de chacune des lentilles un revêtement anti-abrasion par trempage (procédé dit de "dip-coating" et on cuisait 1 heure à 90°C.

La composition anti-abrasion comprenait, par rapport au poids total de la composition, 22% de glycidoxypropylméthyldiméthoxysilane, 62% de silice colloïdale à 30 % dans le méthanol et 0,70% d'acétylacétonate d'aluminium (catalyseur), le complément étant essentiellement constitué d'eau et de solvants classiques.

Les épaisseurs de couches anti-abrasion sont également données dans le tableau I.

Les lentilles revêtues de la couche primaire anti-chocs et du revêtement anti-abrasion étaient ensuite soumises à un traitement anti-reflets par évaporation sous vide (déposé sur les deux faces de chaque lentille).

Le revêtement anti-reflets sur le revêtement anti-abrasion était obtenu par dépôt sous vide :
- d'une première couche à base d'oxyde de zirconium et de titane,
- d'une deuxième couche à base de SiO₂,
l'épaisseur optique pour ces deux couches prises globalement étant voisine de λ/4
- d'une troisième couche à base de TiO₂, d'épaisseur optique λ/2
- d'une quatrième couche à base de SiO₂ d'épaisseur optique λ/4.

La résistance à l'abrasion a été évaluée par détermination de la valeur BAYER sur les substrats revêtus de la couche de primaire anti-chocs et du revêtement anti-abrasion. La détermination de cette valeur BAYER a été établie conformément à la norme ASTM F 735.81.

La résistance aux chocs des lentilles ophtalmiques obtenues a été déterminée sur les substrats revêtus de la couche de primaire, de la couche de revêtement anti-abrasion et du revêtement anti-reflets conformément au test de la chute de bille. Dans ce test, on fait tomber des billes avec une énergie croissante au centre du verre revêtu jusqu'à l'étoilement ou la cassure de celui-ci. L'énergie minimale imposée lors de ce test est de 15,2 g/mètre (correspondant à la première hauteur de chute). Cette énergie est de 200 mJoules et correspond à la valeur minimum imposée par la FDA américaine. On calcule ensuite l'énergie moyenne de rupture du substrat revêtu.

Le verre présente une bonne qualité cosmétique (X) si il passe avec succès les 3 contrôles suivants :
1) Visualisation du verre à l'oeil nu en transmission, à l'aide d'une lampe néon classique.
   Le verre ne doit présenter aucun défaut, en particulier absence de cratères, points brillants ou rayures.
2) Visualisation du verre à l'oeil nu en réflexion.
   Le verre ne doit présenter aucun défaut, en particulier absence de coulées dues aux sirops formés lors de la polymérisation.
3) Visualisation du verre à l'oeil au moyen d'une lampe à arc en transmission.
   Le verre ne doit présenter aucun défaut.

Le test permet de voir la présence de coulures éventuelles sur la couche de latex et celle du vernis anti-abrasion.

Les résultats sont donnés dans le tableau I.

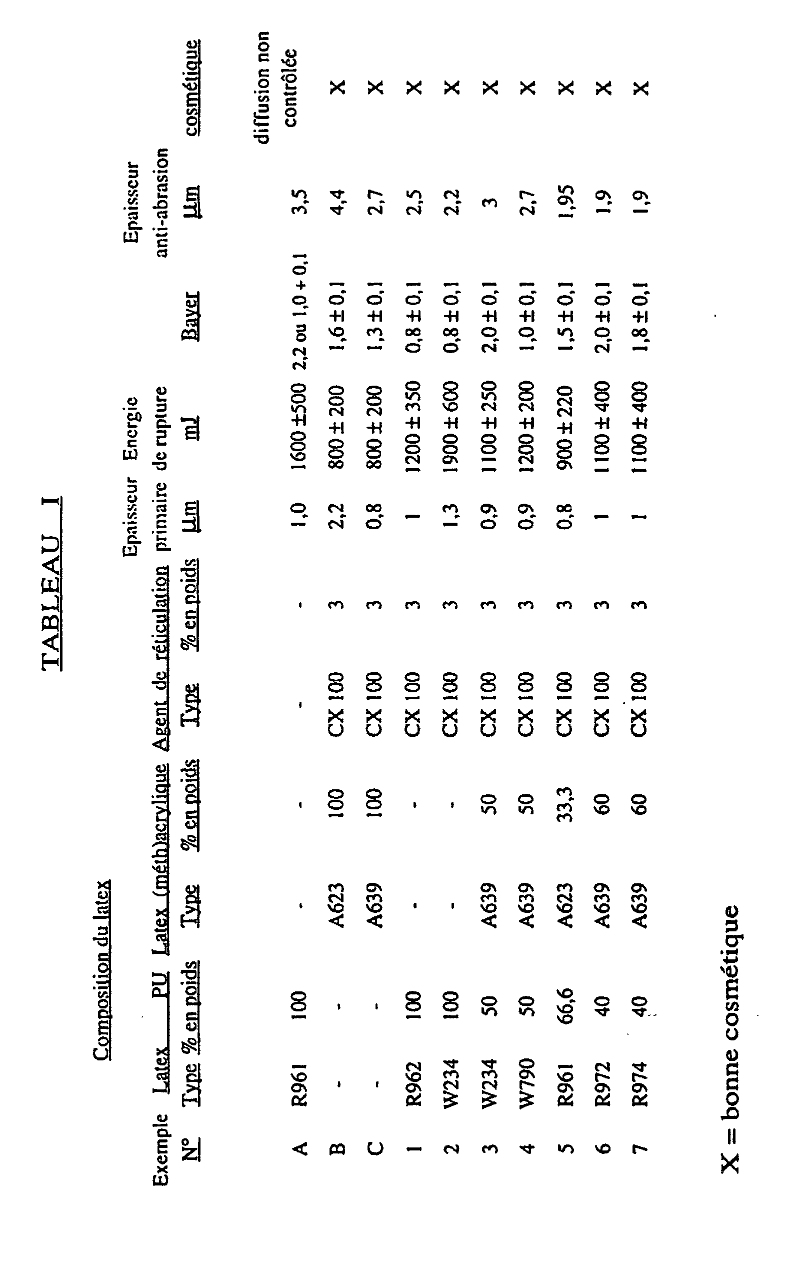

### Nature et caractéristique des latex utilisés

### (Données Fournisseurs).

| Nature du primaire | Type de dispersion aqueuse | % en poids extrait sec | % en poids N. méthylpyrrolidone (solvant) | Viscosité (mPa.s) 25°C |
|---|---|---|---|---|
| Néorez R961 (1) | PU(PES) aliphatique | 34 | 17 | 300 |
| Néorez R962 (1) | PU(PES) aliphatique | 34 | 17 | 225 |
| Néorez R972 (1) | PU(PES) aliphatique | 34 | 9 | 100 |
| Néorez R974 (1) | PU(PES) aliphatique | 40 | 4 | 300 |
| Néocryl A623 (1) | acrylique/ styrène | 35 | (butyl glycol) | 100 |
| Néocryl A639 (1) | acrylique/ styrène | 45 | - | 200 |
| W 231 (2) | PU(PES) aliphatique | 30 | 12.2 | 100 |
| W 234 (2) | PU(PES) aliphatique | 30 | 9.6 | 100 |
| W 755 (2) | PU(PES) aliphatique | 60 | - | 100 |
| W 781 (2) | PU(PES) aliphatique | 40 | - | 150 |
| W 790 (2) | PU(PES) aliphatique | 40 | 9.8 | 100 |
| Fournisseurs : ZENECA (1) ; BAXENDEN (2). | | | | |
| PU(PES) aliphatique = polyuréthanne à motif polyester aliphatique. | | | | |

Les dispersions aqueuses (latex) sont diluées avec de l'eau pour obtenir la viscosité souhaitée. Pour un dépôt centrifuge à 1500 tours/minute pendant 10 à 15 secondes, la viscosité est réglée par dilution dans l'eau, généralement de l'ordre de 50%, pour obtenir une couche de primaire d'environ 1 µm d'épaisseur.

Dans le cas d'un dépôt au trempé, la composition comprendra en général 30% de latex et 70% d'eau.

La vitesse de démouillage est généralement de 12 cm/minute.

Les exemples ci-dessus montrent qu'en utilisant les compositions de latex selon l'invention on obtient des couches de primaires anti-chocs améliorant la résistance aux chocs des lentilles sans nuire à la cosmétique de la lentille.

### EXEMPLES 8 à 12

On a réalisé des lentilles, comme décrit aux exemples précédents, mais en faisant varier, dans les latex utilisés la proportion de latex de polyuréthanne et de latex (méth)acrylique. Les compositions des latex et les résultats obtenus sont donnés dans le tableau II. Toutes les compositions de latex contenaient 3% en poids d'agent de réticulation CX 100, et les couches de primaire avaient toutes une épaisseur de 3,5 µm.

**TABLEAU II**

| Exemple N° | Composition du latex % en poids | | Epaisseur des lentilles au centre mm | Energie de rupture mJ | Bayer | Cosmétique |
|---|---|---|---|---|---|---|
| | R961 | A 631 | | | | |
| 8 | 90 | 10 | 2,04 | 1170 ± 230 | 1,7 | x |
| 9 | 80 | 20 | 2,04 | 930 ± 220 | 1,9 | x |
| 10 | 70 | 30 | 1,88 | 780±240 | 1,8 | x |
| 11 | 60 | 40 | 1,9 | 820 ± 160 | 2,0 | x |
| 12 | 50 | 50 | 2,01 | 800 ± 200 | 2,0 | x |
| 13 | 40 | 60 | 2,04 | 880 ± 170 | 1,9 | x |
| x = bonne cosmétique | | | | | | |

Toutes les couches de primaire selon l'invention satisfont à l'essai de résistance à l'alcool isopropylique. Dans cet essai, on applique entre l'index et la surface du verre organique revêtu de la couche de primaire un essuie-verre industriel CEMOI® imbibé d'alcool isopropylique. Sur une distance totale proche de 2,5 cm on effectue trois allers et retours de l'index en exerçant une pression de 200 g environ. La résistance de la couche de primaire est évaluée visuellement en transmission à la lampe à arc ou par mesure d'épaisseur de la couche. Le fait que les couches de primaire selon l'invention satisfont cet essai permet de stocker les lentilles revêtues de la couche de primaire avant dépôt du revêtement dur anti-abrasion.

Les exemples ci-dessus montrent qu'on obtient des couches de primaire anti-chocs conduisant à un compromis des propriétés de résistance aux chocs et à l'abrasion particulièrement bon, en utilisant des mélanges de latex de polyuréthanne et de latex acrylique selon l'invention.

## Revendications

1. Lentille ophtalmique comprenant un substrat en verre organique, au moins un revêtement anti-abrasion et au moins une couche de primaire anti-chocs intercalée entre le verre organique et le revêtement anti-abrasion, **caractérisée en ce que** la couche de primaire anti-chocs est formée à partir d'une composition de latex comprenant au moins un latex de polyuréthanne et un agent de réticulation du polyuréthanne et exempte de tout latex comportant des motifs butadiène.

2. Lentille ophtalmique selon la revendication 1, **caractérisée en ce que** la composition de latex comprend en outre au moins un latex (méth)acrylique.

3. Lentille ophtalmique selon la revendication 2, **caractérisée en ce que** le latex (méth)acrylique représente 10 à 90%, de préférence 10 à 60% et mieux 40 à 60% du poids total des latex présents dans la composition.

4. Lentille ophtalmique selon la revendication 3, **caractérisée en ce que** le latex (méth)acrylique est un latex de copolymère acrylate-styrène.

5. Lentille ophtalmique selon l'une quelconque des revendications précédentes **caractérisée en ce que** l'agent de réticulation est présent à raison de 0,1 à 5% en poids par rapport au poids de latex.

6. Lentille ophtalmique selon l'une quelconque des revendications précédentes, **caractérisée en ce que** l'agent de réticulation est choisi parmi les aziridines polyfonctionnelles, les résines de mélamine méthoxyméthylée, les résines d'urée, les carbodiimides, les polyisocyanates et les polyisocyanates bloqués.

7. Lentille ophtalmique selon l'une quelconque des revendications précédentes, **caractérisée en ce qu'**elle comprend une seule couche de primaire en face avant ou en face arrière du substrat, préférentiellement en face arrière du substrat.

8. Lentille ophtalmique selon la revendication 7, **caractérisée en ce qu'**elle comprend un revêtement anti-abrasion appliqué sur les deux faces de la lentille.

9. Lentille ophtalmique selon la revendication 8, **caractérisée en ce qu'**elle comprend un revêtement anti-reflets déposé sur le revêtement anti-abrasion de chacune des faces de la lentille.

10. Lentille ophtalmique selon l'une quelconque des revendications 1 à 6, **caractérisée en ce qu'**elle comprend une couche de primaire et une couche anti-abrasion déposées sur la face avant et la face arrière du substrat.

11. Lentille ophtalmique selon la revendication 10, **caractérisée en ce qu'**elle comprend un revêtement anti-reflets déposé sur les revêtements anti-abrasion.

12. Procédé de fabrication d'une lentille ophtalmique, **caractérisé en ce qu'**il comprend :
- le dépôt sur au moins une face du substrat en verre organique d'une composition de latex telle que définie dans l'une quelconque des revendications 1 à 6;
- la cuisson de la composition de latex à une température d'au moins 70°C pour former la ou les couches de primaire anti-chocs; et
- le dépôt sur la ou les couches de primaire anti-chocs obtenues, d'un revêtement anti-abrasion.

13. Procédé selon la revendication 12, **caractérisé en ce qu'**il comprend en outre le dépôt sur le ou les revêtements anti-abrasion d'un revêtement anti-reflets.

## Patentansprüche

1. Ophtalmische Linse, umfassend ein Substrat aus organischem Glas, zumindest eine antiabrasive Beschichtung und zumindest eine Sturzfestigkeits-Primärschicht, zwischengelagert zwischen dem organischen Glas und der antiabrasiven Beschichtung, **dadurch gekennzeichnet, dass** die primäre Stoßfestigkeitsschicht ausgebildet ist, ausgehend von einer Latex-Zusammensetzung, umfassend zumindest ein Polyurethan-Latex und ein Polyurethan-Vemetzungsmittel, frei von jeglichem Butadien-Einheiten enthaltendem Latex.

2. Ophtalmische Linse nach Anspruch 1, **dadurch gekennzeichnet, dass** die Latex-Zusammensetzung ferner zumindest ein Methacryl-Latex umfasst.

3. Ophtalmische Linse nach Anspruch 2, **dadurch gekennzeichnet, dass** das Methacryl-Latex 10 bis 90%, bevorzugt 10 bis 60%, und insbesondere bevorzugt von 40 bis 60% des Gesamtgewichtes an Latex, vorliegend in der Zusammensetzung darstellt.

4. Ophtalmische Linse nach Anspruch 3, **dadurch gekennzeichnet, dass** das Methacryl-Latex ein Acrylat-Styrol-Copolymer-Latex ist.

5. Ophtalmische Linse nach einem der vorangegangenen Ansprüche, **dadurch gekennzeichnet, dass** das Vernetzungsmittel vorliegt bei 0,1 bis 5 Gewichtsprozent mit Bezug auf das Latexgewicht.

6. Ophtalmische Linse nach einem der vorangegangenen Ansprüche, **dadurch gekennzeichnet, dass** das Vernetzungsmittel ausgewählt ist unter den polyfunktionellen Aziridinen, den Methoxymethyl-Melamin-Harzen, den Harnstoff-Harzen, den Carbodiimiden, den Polyisocyanaten und den blockierten Polyisocyanaten.

7. Ophtalmische Linse nach einem der vorangegangenen Ansprüche, **dadurch gekennzeichnet, dass** es lediglich eine Primärschicht an der Frontfläche oder der Heckfläche des Substrates umfasst, bevorzugt der Heckfläche des Substrates.

8. Ophtalmische Linse nach Anspruch 7, **dadurch gekennzeichnet, dass** sie eine antiabrasive Beschichtung umfasst, angewendet an beiden Flächen der Linse.

9. Ophtalmische Linse nach Anspruch 8, **dadurch gekennzeichnet, dass** sie eine Entspiegelungs-Beschichtung umfasst, aufgebracht an der antiabrasiven Beschichtung von jeder der Flächen der Linse.

10. Ophtalmische Linse nach einem der Ansprüche 1 bis 6, **dadurch gekennzeichnet, dass** sie eine Primärschicht und eine Antiabrasiv-Schicht, aufgebracht auf die Frontfläche und die Heckfläche des Substrates umfasst.

11. Ophtalmische Linse nach Anspruch 10, **dadurch gekennzeichnet, dass** sie eine Entspiegelungs- oder Antireflex-Beschichtung umfasst, aufgebracht auf die antiabrasiven Beschichtungen.

12. Verfahren zur Herstellung einer ophtalmischen Linse, **dadurch gekennzeichnet, dass** es umfasst:
- das Aufbringen auf zumindest eine Fläche des Substrates aus organischem Glas von einer Latex-Zusammensetzung, wie definiert in einem der Ansprüche 1 bis 6;
- das Erwärmen der Latex-Zusammensetzung auf eine Temperatur von mindestens 70°C zum Ausbilden der Stoßfestigkeits-Primärschicht(en);
- Aufbringen auf die erhaltene(n) Stoßfestigkeits-Primärschicht(en) von einer antiabrasiven Beschichtung.

13. Verfahren nach Anspruch 12, **dadurch gekennzeichnet, dass** es ferner umfasst das Aufbringen von einer Entspiegelungs- oder Antireflex-Beschichtung auf die antiabrasive(n) Beschichtung(en).

## Claims

1. Ophthalmic lens comprising an organic glass substrate, at least one abrasion-resistant coating and at least one impact-resistant primer layer inserted between the organic glass and the abrasion-resistant coating, **characterized in that** the impact-resistant primer layer is made from a latex composition comprising at least one polyurethane latex and a polyurethane crosslinking agent and free of any latex comprising butadiene units.

2. Ophthalmic lens according to Claims 1, **characterized in that** the latex composition moreover comprises at least one (meth)acrylic latex.

3. Ophthalmic lens according to Claim 2, **characterized in that** the (meth)acrylic latex represents 10 to 90 %, preferably 10 to 60 % and more preferably 40 to 60 % of the total weight of the latex present in the composition.

4. Ophthalmic lens according to Claim 3, **characterized in that** the (meth)acrylic latex is a styrene-acrylate copolymer latex.

5. Ophthalmic lens according to any one of the preceding claims, **characterized in that** the crosslinking agent is present in an amount of 0.1 to 5 % by weight based on the weight of the latex.

6. Ophthalmic lens according to any one of the preceding claims, **characterized in that** the crosslinking agent is selected from polyfunctional aziridines, (methoxymethyl)melamine resins, urea resins, carbodiimides, polyisocyanates and blocked polyisocyanates.

7. Ophthalmic lens according to any one of the preceding claims, **characterized in that** it comprises a single primer layer on the front face or on the rear face of the substrate, preferably on the rear face of the substrate.

8. Ophthalmic lens according to Claim 7, **characterized in that** it comprises an abrasion-resistant coating applied to both faces of the lens.

9. Ophthalmic lens according to Claim 8, **characterized in that** it comprises an anti-reflection coating coated on the abrasion-resistant coating of each of the faces of the lens.

10. Ophthalmic lens according to any one of Claims 1 to 6, **characterized in that** it comprises a primer layer and an abrasion-resistant layer which are coated on the front face and the rear face of the substrate.

11. Ophthalmic lens according to Claim 10, **characterized in that** it comprises an anti-reflection coating coated on the abrasion-resistant coatings.

12. Method for manufacturing an ophthalmic lens, **characterized in that** it comprises :
- coating a latex composition as defined in any one of Claims 1 to 6 on at least one face of an organic glass substrate ;
- curing the latex composition at a temperature of at least 70 °C in order to form the impact-resistant primer layer or layers ; and
- coating an abrasion-resistant coating on the impact-resistant primer layer or layers obtained.

13. Method according to Claim 12, **characterized in that** it moreover comprises the coating of an anti-reflection coating on the abrasion-resistant coating or coatings.
